# FASCICULE DE BREVET EUROPEEN

(11) **EP 3 981 616 B1**
(45) Date de publication et mention de la délivrance du brevet: **19.07.2023**
(21) Numéro de dépôt: 21198943.9
(22) Date de dépôt: 24.09.2021
(51) Int. Cl.: B60C 11/24

(54) **PROCEDE D'EVALUATION DE L'USURE D'UN PNEUMATIQUE**
VERFAHREN ZUR EINSCHÄTZUNG DES VERSCHLEISSES EINES REIFENS
METHOD FOR EVALUATING THE WEAR OF A TYRE

(30) Priorité: 08.10.2020 FR 2010275
(43) Date de publication de la demande: 13.04.2022
(73) Titulaire: Sagemcom Energy & Telecom SAS, 92500 Rueil-Malmaison (FR)
(72) Inventeur: TEBOULLE, Henri, 92500 RUEIL MALMAISON (FR); SABRAOUI, Abbas, 92500 RUEIL MALMAISON (FR)
(74) Mandataire: Lavaud, Thomas

(56) Documents cités:
- WO-A1-2008/061770
- WO-A1-2015/044443
- DE-A1-102015 117 024

## Description

L'invention concerne le domaine de la surveillance des pneumatiques d'un véhicule.

### ARRIERE PLAN DE L'INVENTION

L'évaluation de l'usure du pneumatique d'une roue d'une voiture se fait généralement en inspectant (visuellement ou au toucher) les témoins d'usure qui sont situés dans les rainures de la bande de roulement du pneumatique. Cette méthode nécessite donc une intervention humaine.

Certaines personnes ne connaissent pas cette manière de procéder, ou bien oublient de vérifier régulièrement l'état de leurs pneumatiques, ce qui augmente les risques d'accident. Par ailleurs, et de manière plus générale, les opérations de surveillance confiées aux utilisateurs sont peu fiables.

Il est donc envisagé de mesurer automatiquement et sans aucune intervention humaine le niveau d'usure d'un pneumatique.

Une solution de l'art antérieur consiste, pour évaluer automatiquement l'état de stress d'un pneumatique, à positionner un capteur piézoélectrique (par exemple un câble piézoélectrique) sur une surface interne du pneumatique, à analyser en continu et en fréquentiel le signal reçu par le capteur piézoélectrique, et à évaluer l'état de stress du pneumatique à partir de cette analyse.

Cette solution ne permet pas d'estimer directement l'usure du pneumatique. Par ailleurs, la position du capteur piézoélectrique dans le pneumatique nécessite de mettre en oeuvre une communication sans fil entre une partie tournante (la roue) et une partie fixe (le reste de la voiture) pour transmettre les mesures, mais aussi de prévoir dans le pneumatique ou la roue des moyens d'alimentation du capteur piézoélectrique (une pile par exemple).

Cet agencement est donc à la fois coûteux et complexe à concevoir (et à maintenir).

WO 2008/061770 A1 est un document de l'art antérieur, qui consiste à envoyer un premier signal qui est réfléchi par le sommet de la bande de roulement, puis un deuxième signal qui est lui réfléchi par le fond d'une rainure, et à déduire des signaux reçus la profondeur la rainure.

### OBJET DE L'INVENTION

L'invention, définie dans la revendication indépendante 1, a pour objet de mesurer automatiquement et de manière simple et peu coûteuse le niveau d'usure du pneumatique d'une roue d'un véhicule.

### RESUME DE L'INVENTION

En vue de la réalisation de ce but, on propose un procédé d'évaluation de l'usure d'un pneumatique d'une roue de véhicule, comprenant les étapes de mesure de :
- faire émettre, par un transducteur positionné sur le véhicule à proximité du pneumatique, un premier signal ultrasonore ;
- acquérir un signal électrique de mesure produit par ledit transducteur lorsque celui-ci reçoit un deuxième signal ultrasonore résultant d'une réflexion du premier signal ultrasonore par une cible métallique intégrée dans une épaisseur d'une zone sommet du pneumatique ;
- mesurer au moins un paramètre du signal électrique de mesure ;
- évaluer l'usure du pneumatique à partir dudit paramètre.

Le procédé d'évaluation selon l'invention permet donc d'évaluer automatiquement et dynamiquement l'usure du pneumatique, sans intégrer dans le pneumatique ou dans la roue de capteur nécessitant une alimentation et des moyens de communication sans fil.

On propose de plus un procédé d'évaluation de l'usure tel que précédemment décrit, dans lequel la cible métallique est intégrée dans une épaisseur d'une bande de roulement du pneumatique.

On propose de plus un procédé d'évaluation de l'usure tel que précédemment décrit, dans lequel la cible métallique appartient à une armature du pneumatique située dans la zone sommet sous une bande de roulement du pneumatique.

On propose de plus un procédé d'évaluation de l'usure tel que précédemment décrit, dans lequel les étapes de mesure sont réalisées suite à un démarrage du véhicule qui survient après une durée d'arrêt du véhicule au moins égale à une durée prédéterminée.

On propose de plus un procédé d'évaluation de l'usure tel que précédemment décrit, dans lequel les étapes de mesure sont mises en oeuvre lorsqu'une roue sur laquelle est monté le pneumatique est droite.

On propose de plus un procédé d'évaluation de l'usure tel que précédemment décrit, comprenant l'étape d'acquérir une information d'une position angulaire d'un volant du véhicule pour déterminer si la roue est droite ou non.

On propose de plus un procédé d'évaluation de l'usure tel que précédemment décrit, comprenant en outre les étapes d'acquérir une estimation d'une pression de gonflage du pneumatique, de vérifier si la pression de gonflage est normale, et d'invalider l'évaluation de l'usure du pneumatique si la pression de gonflage est anormale.

On propose de plus un procédé d'évaluation de l'usure tel que précédemment décrit, dans lequel les étapes de mesure sont réalisées avec un transducteur intérieur monté d'un côté intérieur du pneumatique par rapport au véhicule, et avec un transducteur extérieur monté d'un côté extérieur du pneumatique.

On propose de plus un procédé d'évaluation de l'usure tel que précédemment décrit, comprenant les étapes de produire avec le transducteur intérieur une première évaluation de l'usure du côté intérieur du pneumatique et avec le transducteur extérieur une deuxième évaluation de l'usure du côté extérieur du pneumatique, puis de détecter la présence ou l'absence d'un défaut de parallélisme à partir de la première évaluation de l'usure et de la deuxième évaluation de l'usure.

On propose de plus un équipement embarqué agencé pour être intégré dans un véhicule et pour être relié à au moins un transducteur, et comprenant un composant de traitement agencé pour mettre en oeuvre le procédé d'évaluation de l'usure tel que précédemment décrit.

On propose de plus un système de mesure comprenant un transducteur et un équipement embarqué tel que précédemment décrit.

On propose de plus un système de mesure tel que précédemment décrit, comprenant un transducteur intérieur agencé pour être monté d'un côté intérieur d'un pneumatique par rapport au véhicule, et un transducteur extérieur agencé pour être monté d'un côté extérieur du pneumatique.

On propose de plus un programme d'ordinateur comprenant des instructions qui conduisent le composant de traitement de l'équipement embarqué tel que précédemment décrit à exécuter les étapes du procédé d'évaluation de l'usure tel que précédemment décrit.

On propose de plus un support d'enregistrement lisible par ordinateur, sur lequel est enregistré le programme d'ordinateur tel que précédemment décrit.

L'invention sera mieux comprise à la lumière de la description qui suit de modes de mise en oeuvre particuliers non limitatifs de l'invention.

### BREVE DESCRIPTION DES DESSINS

Il sera fait référence aux dessins annexés parmi lesquels :
[Fig. 1] la figure 1 représente un transducteur et une vue en perspective d'un pneumatique ;
[Fig. 2] la figure 2 représente le transducteur et une vue en coupe du pneumatique selon un plan vertical passant par un axe de rotation du pneumatique ;
[Fig. 3] la figure 3 représente un signal électrique d'excitation et un signal électrique de mesure obtenu alors que le pneumatique n'est pas usé ;
[Fig. 4] la figure 4 représente le signal électrique d'excitation et un signal électrique de mesure obtenu alors que le pneumatique est usé ;
[Fig. 5] la figure 5 représente un composant de traitement dans lequel est mis en oeuvre le procédé d'évaluation de l'usure selon l'invention ;
[Fig. 6] la figure 6 représente des étapes du procédé d'évaluation de l'usure selon l'invention ;
[Fig. 7] la figure 7 est une figure similaire à la figure 1, avec un transducteur intérieur et un transducteur extérieur.

### DESCRIPTION DETAILLEE DE L'INVENTION

Le procédé d'évaluation de l'usure selon un premier mode de réalisation de l'invention est ici mis en oeuvre dans une voiture qui comporte quatre roues.

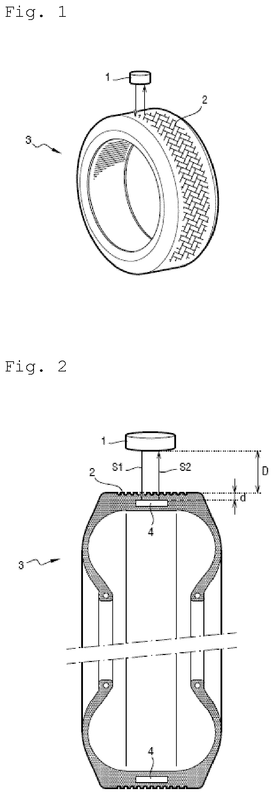

En référence à la figure 1, un transducteur 1 est monté ici sur une surface externe du passage de roue de chaque roue, au-dessus de ladite roue. Le transducteur 1 est un transducteur piézoélectrique. Le transducteur 1 se trouve en regard de la bande de roulement 2 du pneumatique 3 qui est monté sur ladite roue.

Le pneumatique 3 comprend au moins une cible métallique qui est intégrée dans l'épaisseur de la zone sommet du pneumatique 3. Ici, le pneumatique 3 comprend une pluralité de cibles métalliques, qui sont en l'occurrence des plaques métalliques 4 qui sont intégrées chacune dans l'épaisseur de la bande de roulement 2. Chaque plaque métallique 4 est centrée dans la largeur de la bande de roulement 2 et s'étend perpendiculairement à une direction radiale passant par le centre du pneumatique 3 et le centre de ladite plaque métallique 4. Les plaques métalliques 4 sont régulièrement réparties sur le tour de la bande de roulement 2. Chaque plaque métallique 4 a par exemple pour longueur 10cm environ et est par exemple fabriquée en aluminium.

Un équipement embarqué est intégré dans la voiture et est connecté aux quatre transducteurs 1 associés aux quatre pneumatiques 3.

L'équipement embarqué est ici un calculateur relié à l'ordinateur de bord. Le calculateur comporte un module de traitement comprenant un composant de traitement qui est adapté à exécuter des instructions d'un programme pour mettre en oeuvre le procédé d'évaluation de l'usure selon l'invention. Le programme est stocké dans une mémoire reliée ou intégrée dans le composant de traitement. Le composant de traitement est par exemple un processeur, un DSP (pour *Digital Signal Processor),* un microcontrôleur, ou bien un circuit logique programmable tel qu'un FPGA (pour *Field Programmable Gate Arrays*) ou un ASIC (pour *Application Spécifie Integrated Circuit) .*

En référence à la figure 2, le procédé d'évaluation de l'usure consiste, pour chaque pneumatique 3, à émettre un premier signal ultrasonore S1 via le transducteur 1 associé, à recevoir, via ledit transducteur 1, un deuxième signal ultrasonore S2 résultant d'une réflexion du premier signal ultrasonore S1 par l'une des plaques métalliques 4 intégrées dans la bande de roulement 2 dudit pneumatique 3, puis à produire une estimation de l'usure du pneumatique 3 à partir du deuxième signal ultrasonore S2. L'onde ultrasonore parcourt donc deux fois la distance D et, en particulier, deux fois la distance d dans le pneumatique 3.

Plus la distance d est importante, c'est-à-dire plus l'épaisseur de la bande de roulement 2 entre son sommet et la plaque métallique 4 est importante, plus le premier signal ultrasonore S1 et le deuxième signal ultrasonore S2 seront absorbés, et donc moins le niveau de réflexion par la plaque métallique 4 sera important. Ainsi, à une température ambiante donnée, plus le niveau de l'écho est élevé, plus le pneumatique 3 est usé. On utilisera avantageusement, pour focaliser suffisamment le premier signal ultrasonore S1 sur la bande de roulement 2 du pneumatique 3, un transducteur 1 ayant un diamètre relativement important. Le diamètre du transducteur 1 est ici compris par exemple entre 2cm et 3cm.

On notera que la vue en coupe de la figure 2 est une vue très simplifiée du pneumatique sur laquelle est représentée la bande de roulement 2 (dans laquelle sont intégrées les plaques métalliques 4) mais sur laquelle les autres éléments de la zone sommet ne sont pas représentés (armature de sommet, armature de carcasse, etc.).

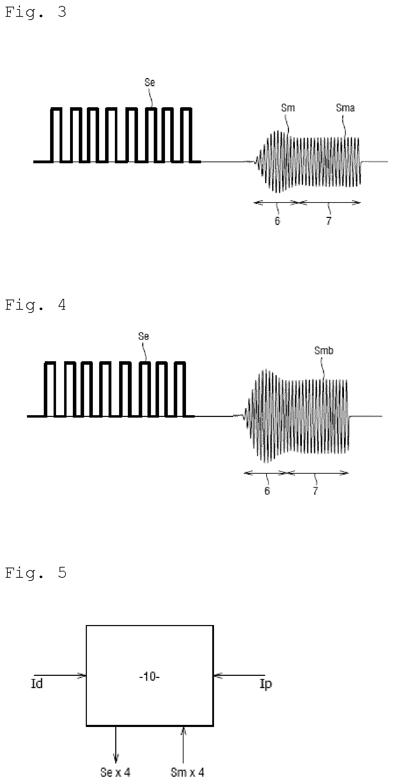

En référence aux figures 3 et 4, le composant de traitement produit donc tout d'abord un signal électrique d'excitation Se (ici rectangulaire), et fait émettre par le transducteur 1 le premier signal ultrasonore S1 en appliquant le signal électrique d'excitation Se aux bornes du transducteur 1.

Le signal électrique d'excitation Se (et donc le premier signal ultrasonore S1 et le deuxième signal ultrasonore S2) comporte par exemple vingt lobes (c'est-à-dire possiblement moins que sur les figures 3 et 4).

On sait que, plus la fréquence ultrasonique est faible, moins l'atténuation dans l'air sera importante. La fréquence d'excitation du transducteur 1, c'est-à-dire la fréquence du signal électrique d'excitation Se (et donc du premier signal ultrasonore S1 et du deuxième signal ultrasonore S2) est donc choisie relativement faible. La fréquence d'excitation est ici comprise par exemple entre 40kHz et 500kHz.

Le composant de traitement va ensuite acquérir un signal électrique de mesure Sm. Le signal électrique de mesure Sm est produit par le transducteur 1 lorsque celui-ci reçoit le deuxième signal ultrasonore S2.

Cette opération est répétée un certain nombre de fois sur une période de mesure donnée, qui est par exemple égale à 100ms. Chaque période de mesure comprend typiquement dix mesures (c'est-à-dire que le composant de traitement fait émettre dix fois le premier signal ultrasonore S1 et acquiert dix fois le signal électrique de mesure Sm correspondant au deuxième signal ultrasonore S2).

Lorsque la roue tourne, le transducteur 1 ne se trouve pas en permanence en face d'une plaque métallique 4 et, parmi les premiers signaux ultrasonores S1 émis au cours de la période de mesure, certains ne sont pas réfléchis par une plaque métallique 4 mais traversent une portion de la bande de roulement 2 située entre deux plaques métalliques 4, de sorte que les deuxièmes signaux ultrasonores S2 associés et donc les signaux électriques de mesure Sm associés ont une amplitude relativement faible.

Ainsi, au cours de chaque période de mesure, lorsque l'amplitude d'un signal électrique de mesure Sm est strictement inférieure à un seuil d'exploitation prédéterminé, le composant de traitement n'exploite pas ledit signal électrique de mesure Sm. Au contraire, lorsque l'amplitude d'un signal électrique de mesure Sm est supérieure ou égale au seuil d'exploitation prédéterminé, le composant de traitement considère que le deuxième signal ultrasonore S2 dont est issu le signal électrique de mesure Sm résulte bien de la réflexion du premier signal ultrasonore S1 par l'une des plaques métalliques 4, et exploite le signal électrique de mesure Sm.

Pour chaque signal électrique de mesure Sm exploitable, le composant de traitement mesure au moins un paramètre du signal électrique de mesure Sm, qui est représentatif de l'usure du pneumatique 3.

Le paramètre est ici une amplitude du signal électrique de mesure Sm. On voit sur les figures 3 et 4 que chaque signal électrique de mesure Sm comprend une portion de signal préliminaire 6 et une portion de signal utile 7. Dans la portion de signal préliminaire 6, l'amplitude du signal électrique de mesure Sm croît de manière importante puis décroît. Dans la portion de signal utile 7, l'amplitude du signal électrique de mesure Sm est relativement constante. Dans le cas où le premier signal ultrasonore S1 comporte vingt lobes, la portion de signal préliminaire 6 comporte typiquement cinq ou six lobes.

L'amplitude du signal électrique de mesure Sm est ici plus importante dans la portion de signal préliminaire 6, ce qui est dû au fait que la fréquence d'excitation du transducteur 1 ne correspond pas exactement à sa fréquence de résonnance. Bien sûr, il aurait été possible de choisir une fréquence d'excitation égale à la fréquence de résonance du transducteur 1.

Ici, on utilise comme amplitude du signal électrique de mesure Sm l'amplitude de la portion de signal utile 7. Cette amplitude est par exemple égale à une amplitude moyenne des lobes de la portion de signal utile 7, ou bien à l'amplitude d'un lobe prédéterminé du signal électrique de mesure Sm compris dans la portion de signal utile 7. Le lobe prédéterminé est par exemple le dixième lobe du signal électrique de mesure Sm dans le cas où le premier signal ultrasonore S1 comprend vingt lobes.

On voit sur la figure 3 un signal électrique de mesure Sma dans le cas où l'usure du pneumatique 3 est très faible, et sur la figure 4 un signal électrique de mesure Smb dans le cas où l'usure du pneumatique 3 est relativement importante. On constate que l'amplitude du signal électrique de mesure Smb est plus élevée.

Le composant de traitement compare donc l'amplitude du signal électrique de mesure Sm avec au moins un seuil de surveillance prédéterminé. Bien sûr, si, au cours de la période de mesure, plusieurs signaux électriques de mesure Sm sont exploités, l'amplitude en question peut être obtenue à partir des amplitudes de plusieurs signaux électriques de mesure Sm (et être par exemple égale à une moyenne desdites amplitudes).

Lorsque l'amplitude du signal électrique de mesure Sm devient supérieure au seuil de surveillance prédéterminé, une alarme est automatiquement générée pour alerter le conducteur de la voiture de l'état de l'usure du pneumatique 3.

Ici, trois seuils de surveillance prédéterminés sont configurés dans le composant de traitement.

Lorsque l'amplitude du signal électrique de mesure Sm devient strictement supérieure à un premier seuil de surveillance prédéterminé, une usure faible du pneumatique 3 est détectée, et un premier message d'alarme est envoyé à l'ordinateur de bord.

Lorsque l'amplitude du signal électrique de mesure Sm devient strictement supérieure à un deuxième seuil de surveillance prédéterminé (qui est supérieur au premier seuil prédéterminé), une usure moyenne est détectée et un deuxième message d'alarme est envoyé à l'ordinateur de bord.

Le premier message d'alarme et le deuxième message d'alarme ne sont pas nécessairement transmis directement au conducteur. Le premier message d'alarme et le deuxième message d'alarme visent à mettre en oeuvre une maintenance préventive et/ou une maintenance prédictive, de manière à anticiper une usure problématique et à changer le pneumatique avant que celui-ci ne se trouve dans un état d'usure potentiellement à risque.

Lorsque l'amplitude du signal électrique de mesure Sm devient strictement supérieure à un troisième seuil de surveillance prédéterminé (qui est supérieur au deuxième seuil de surveillance prédéterminé), une usure importante est détectée et un troisième message d'alarme est envoyé à l'ordinateur de bord. Le troisième message d'alarme est transmis directement au conducteur et incite celui-ci à mettre en oeuvre une maintenance immédiate et donc à changer le pneumatique immédiatement.

Il est préférable de réaliser les mesures alors que la roue est droite, pour que le transducteur 1 soit bien positionné en regard de la bande de roulement 2 du pneumatique 3.

On sait par ailleurs que l'état du pneumatique 3, qui peut être plus ou moins sec ou mouillé, et plus ou moins chaud ou froid, a un impact sur le niveau d'absorption de l'onde ultrasonore et sur le niveau de la réflexion.

Or, lorsque la voiture roule, le pneumatique 3 chauffe et sa température n'est pas connue. L'état sec ou mouillé du pneumatique 3 n'est pas non plus connu. Ces paramètres ne peuvent donc pas être compensés facilement.

Par conséquent, pour éviter que l'état du pneumatique 3 n'ait un impact trop important sur l'estimation de l'usure du pneumatique 3, la mesure de l'usure est faite au démarrage de la voiture, après un arrêt suffisamment long. Ainsi, la température du pneumatique 3 est égale à la température ambiante (qui elle est connue) et l'état de la chaussée n'a pas d'impact sur la mesure. La manière dont l'écho va se faire à cette température connue est bien maîtrisée.

Le composant de traitement met donc en oeuvre les étapes de mesure qui viennent d'être décrites suite à un démarrage du véhicule qui survient après une durée d'arrêt du véhicule au moins égale à une durée prédéterminée. La durée prédéterminée est ici par exemple égale à une heure.

De plus, le composant de traitement met en oeuvre les étapes de mesure lorsque la roue sur laquelle est monté le pneumatique 3 est droite.

En référence à la figure 5, le composant de traitement 10, pour chacun des quatre transducteurs 1, produit le signal électrique d'excitation Se et l'applique aux bornes dudit transducteur 1 (pour que celui-ci génère le premier signal ultrasonore S1), et reçoit un signal électrique de mesure Sm (résultant de la réception par ledit transducteur 1 du deuxième signal ultrasonore S2).

Le composant de traitement 10 acquiert aussi des informations Id relatives au démarrage, qui lui permettent de déterminer, au moment d'un démarrage, la durée précédant le démarrage pendant laquelle la voiture était à l'arrêt.

Le composant de traitement 10 acquiert en outre des informations Ip relatives à la position angulaire du volant de la voiture, qui lui permettent de déterminer si la roue est droite ou non.

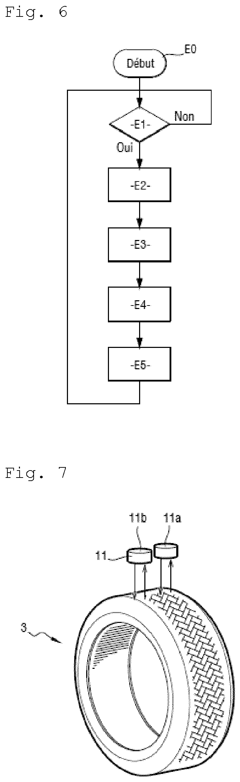

On résume ce qui vient d'être dit grâce à l'organigramme fonctionnel de la figure 6.

Le procédé d'évaluation de l'usure débute (étape E0). Le composant de traitement 10 attend que se produise un démarrage après au moins une heure d'arrêt (étape E1). Tant qu'un tel démarrage ne survient pas, le procédé retourne à l'étape E1.

Lorsqu'un tel démarrage se produit, le composant de traitement 10 attend que le volant soit droit (étape E2).

Lorsque c'est le cas, le composant de traitement 10 met en oeuvre les étapes de mesure. Pour chaque transducteur 1, le composant de traitement 10 génère et applique le signal électrique d'excitation Se aux bornes dudit transducteur 1 de sorte que celui-ci génère le premier signal ultrasonore S1, puis reçoit le signal électrique de mesure Sm associé au deuxième signal ultrasonore S2, et mesure l'amplitude du signal électrique de mesure Sm (par exemple l'amplitude du dixième lobe) qui est représentative de l'usure dudit pneumatique (étape E3).

Pour chaque pneumatique, le composant de traitement compare l'amplitude du signal électrique de mesure Sm avec chacun des trois seuils de surveillance prédéterminés (étape E4), puis produit si nécessaire un ou des messages d'alarme appropriés (étape E5). Chaque message d'alarme comprend un identifiant du pneumatique concerné. Le procédé d'évaluation de l'usure retourne alors à l'étape E1.

Avantageusement, pour chaque pneumatique, au moment d'un démarrage « pertinent » (c'est-à-dire d'un démarrage qui suit un arrêt d'au moins une heure), le composant de traitement acquiert une estimation de la pression de gonflage du pneumatique au moment dudit démarrage, vérifie si la pression de gonflage est normale, et invalide l'évaluation de l'usure du pneumatique si la pression de gonflage est anormale. Une pression de gonflage « normale » correspond à une pression de gonflage comprise dans un intervalle de pression normale prédéterminé.

On note qu'il est possible de prévoir que, chaque fois que des pneumatiques neufs sont montés, une auto-calibration soit initiée par le conducteur afin que soit déterminée la courbe de référence des échos ultrasoniques.

L'auto-calibration consiste par exemple à paramétrer le type des pneumatiques qui sont montés. Le paramétrage peut consister à distinguer des pneumatiques de gomme tendre et des pneumatiques de gomme dure.

Les seuils de surveillance prédéterminés sont alors définis en fonction du type des pneumatiques. Bien sûr, ces seuils de surveillance prédéterminés dépendent aussi de la tension du signal électrique d'excitation Se. La tension d'excitation (c'est-à-dire l'amplitude maximale du signal électrique d'excitation Se) est ici constante et peut avoir une valeur quelconque, comprise par exemple entre 1V et 100V. La tension d'excitation est typiquement égale à 12V.

Bien sûr, l'invention peut aussi s'appliquer aux véhicules déjà en circulation. Au moment de l'intégration du système de mesure dans le véhicule, on peut prévoir de réaliser une auto-calibration avec les pneumatiques existants.

On notera aussi que l'effet de la position des amortisseurs avant et arrière influe peu sur la mesure, car c'est dans le caoutchouc qu'il y a l'atténuation la plus forte (et même beaucoup plus forte, de sorte que l'effet de l'atténuation dans l'air est négligeable).

En référence à la figure 7, le procédé d'évaluation de l'usure selon un deuxième mode de réalisation de l'invention est cette fois mis en oeuvre dans un système de mesure qui comporte non pas un mais deux transducteurs 11 par pneumatique 3. Les deux transducteurs 11 sont des transducteurs piézoélectriques.

Les deux transducteurs 11 associés à un pneumatique 3 comportent un transducteur intérieur 11a monté du côté intérieur du pneumatique 3 par rapport à la voiture, et un transducteur extérieur 11b monté du côté extérieur du pneumatique 3.

Les étapes de mesure qui viennent d'être décrites sont réalisées, pour chaque pneumatique 3, pour le transducteur intérieur 11a puis pour le transducteur extérieur 11b (ou inversement).

On génère donc un écho aux extrémités interne et externe de la zone sommet du pneumatique 3. On produit ainsi avec le transducteur intérieur 11a une première évaluation de l'usure du côté intérieur du pneumatique 3 et avec le transducteur extérieur 11b une deuxième évaluation de l'usure du côté extérieur du pneumatique 3.

Le composant de traitement peut ainsi, à partir de la première évaluation de l'usure et de la deuxième évaluation de l'usure, détecter la présence ou l'absence d'un défaut de parallélisme, dû à une usure dissymétrique.

Bien entendu, l'invention n'est pas limitée aux modes de réalisation décrits mais englobe toute variante entrant dans le champ de l'invention telle que définie par les revendications.

Chaque pneumatique dont l'usure est mesurée comporte ici des plaques métalliques intégrées dans la bande de roulement. Les plaques métalliques ne sont pas nécessairement planes mais pourraient présenter une forme différente, arrondie par exemple. Il est possible d'utiliser une seule plaque qui s'étend sur la totalité du tour de la bande de roulement. La forme de la cible métallique n'est pas nécessairement plate.

La (ou les) cible métallique n'est pas nécessairement intégrée dans la bande de roulement du pneumatique. La cible métallique peut appartenir à une armature du pneumatique située dans la zone sommet sous la bande de roulement. Cette solution est très avantageuse car le procédé d'évaluation de l'usure peut alors être mis en oeuvre avec des pneumatiques classiques, ne présentant pas de caractéristique dédiée à la mise en oeuvre de l'invention.

On a présenté ici une architecture très « centralisée » pour mettre en oeuvre le procédé d'évaluation de l'usure selon l'invention. Dans cette architecture, c'est le calculateur intégrant le composant de traitement qui génère les signaux électriques d'excitation qui sont transmis aux transducteurs, et qui acquiert les signaux électriques de mesure. Une autre architecture, plus « distribuée », peut bien sûr être envisagée. Par exemple, une unité électronique « déportée » peut être positionnée à proximité de chaque transducteur. Cette unité électronique peut produire les signaux électrique d'excitation, les appliquer aux bornes du transducteur, acquérir les signaux électriques de mesure, et mesurer les amplitudes des signaux électriques de mesure. L'unité électronique peut alors elle-même détecter une usure anormale du pneumatique et produire une alarme, ou bien transmettre les amplitudes des signaux électriques de mesure à un composant de traitement centralisé qui effectue cette analyse pour tous les pneumatiques.

L'invention peut bien sûr être mise en oeuvre avec des pneumatiques de roues de tout type de véhicule : voiture, moto, aéronef, etc.

## Revendications

1. Procédé d'évaluation de l'usure d'un pneumatique (3) d'une roue de véhicule, comprenant les étapes de mesure de :
- faire émettre, par un transducteur (1 ; 11a, 11b) positionné sur le véhicule à proximité du pneumatique (3), un premier signal ultrasonore (S1) ;
- acquérir un signal électrique de mesure (Sm) produit par ledit transducteur lorsque celui-ci reçoit un deuxième signal ultrasonore (S2) résultant d'une réflexion du premier signal ultrasonore par une cible métallique (4) intégrée dans une épaisseur d'une zone sommet du pneumatique ;
- mesurer au moins un paramètre du signal électrique de mesure ;
- évaluer l'usure du pneumatique à partir dudit paramètre.

2. Procédé d'évaluation de l'usure selon la revendication 1, dans lequel la cible métallique (4) est intégrée dans une épaisseur d'une bande de roulement (2) du pneumatique (3).

3. Procédé d'évaluation de l'usure selon la revendication 1, dans lequel la cible métallique appartient à une armature du pneumatique située dans la zone sommet sous une bande de roulement du pneumatique.

4. Procédé d'évaluation de l'usure selon l'une des revendications précédentes, dans lequel les étapes de mesure sont réalisées suite à un démarrage du véhicule qui survient après une durée d'arrêt du véhicule au moins égale à une durée prédéterminée.

5. Procédé d'évaluation de l'usure selon l'une des revendications précédentes, dans lequel les étapes de mesure sont mises en oeuvre lorsqu'une roue sur laquelle est monté le pneumatique (3) est droite.

6. Procédé d'évaluation de l'usure selon la revendication 5, comprenant l'étape d'acquérir une information d'une position angulaire d'un volant du véhicule pour déterminer si la roue est droite ou non.

7. Procédé d'évaluation de l'usure selon l'une des revendications précédentes, comprenant en outre les étapes d'acquérir une estimation d'une pression de gonflage du pneumatique, de vérifier si la pression de gonflage est normale, et d'invalider l'évaluation de l'usure du pneumatique si la pression de gonflage est anormale.

8. Procédé d'évaluation de l'usure selon l'une des revendications précédentes, dans lequel les étapes de mesure sont réalisées avec un transducteur intérieur (11a) monté d'un côté intérieur du pneumatique (3) par rapport au véhicule, et avec un transducteur extérieur (11b) monté d'un côté extérieur du pneumatique.

9. Procédé d'évaluation de l'usure selon la revendication 8, comprenant les étapes de produire avec le transducteur intérieur (11a) une première évaluation de l'usure du côté intérieur du pneumatique et avec le transducteur extérieur (11b) une deuxième évaluation de l'usure du côté extérieur du pneumatique (3), puis de détecter la présence ou l'absence d'un défaut de parallélisme à partir de la première évaluation de l'usure et de la deuxième évaluation de l'usure.

10. Equipement embarqué agencé pour être intégré dans un véhicule et pour être relié à au moins un transducteur, et comprenant un composant de traitement (10) agencé pour mettre en oeuvre le procédé d'évaluation de l'usure selon l'une des revendications précédentes.

11. Système de mesure comprenant un transducteur (1 ; 11a, 11b) et un équipement embarqué selon la revendication 10.

12. Système de mesure selon la revendication 11, comprenant un transducteur intérieur (11a) agencé pour être monté d'un côté intérieur d'un pneumatique par rapport au véhicule, et un transducteur extérieur (11b) agencé pour être monté d'un côté extérieur du pneumatique.

13. Programme d'ordinateur comprenant des instructions qui conduisent le composant de traitement (10) de l'équipement embarqué selon la revendication 10 à exécuter les étapes du procédé d'évaluation de l'usure selon l'une des revendications 1 à 9.

14. Support d'enregistrement lisible par ordinateur, sur lequel est enregistré le programme d'ordinateur selon la revendication 13.

## Patentansprüche

1. Verfahren zur Evaluierung des Verschleißes eines Reifens (3) eines Fahrzeugrades, umfassend die Messschritte:
- Veranlassen, dass ein Wandler (1; 11a, 11b), der an dem Fahrzeug in der Nähe des Reifens (3) positioniert ist, ein erstes Ultraschallsignal (S1) aussendet;
- Erfassen eines elektrischen Messsignals (Sm), das von dem genannten Wandler erzeugt wird, wenn dieser ein zweites Ultraschallsignal (S2) empfängt, das aus einer Reflexion des ersten Ultraschallsignals durch ein Metallziel (4) resultiert, das in eine Dicke eines Kronenbereichs des Reifens integriert ist;
- Messen mindestens eines Parameters des elektrischen Messsignals;
- Evaluieren des Verschleißes des Reifens anhand des genannten Parameters.

2. Verfahren zur Evaluierung des Verschleißes nach Anspruch 1, bei dem das Metallziel (4) in eine Dicke einer Lauffläche (2) des Reifens (3) integriert ist.

3. Verfahren zur Evaluierung des Verschleißes nach Anspruch 1, bei dem das Metallziel zu einer Karkasse des Reifens gehört, die sich in dem Kronenbereich unter einer Lauffläche des Reifens befindet.

4. Verfahren zur Evaluierung des Verschleißes nach einem der vorhergehenden Ansprüche, bei dem die Messschritte nach einem Starten des Fahrzeugs durchgeführt werden, das nach einer Anhaltedauer des Fahrzeugs von mindestens gleich einer vorbestimmten Dauer erfolgt.

5. Verfahren zur Evaluierung des Verschleißes nach einem der vorhergehenden Ansprüche, bei dem die Messchritte durchgeführt werden, wenn ein Rad, an dem der Reifen (3) montiert ist, gerade steht.

6. Verfahren zur Evaluierung des Verschleißes nach Anspruch 5, umfassend den Schritt des Erfassens einer Information einer Winkelposition eines Lenkrads des Fahrzeugs, um zu bestimmen, ob das Rad gerade steht oder nicht.

7. Verfahren zur Evaluierung des Verschleißes nach einem der vorhergehenden Ansprüche, ferner umfassend die Schritte des Erfassens einer Schätzung eines Reifenfülldrucks, des Verifizierens, ob der Reifenfülldruck normal ist, und des Invalidierens der Evaluierung des Verschleißes des Reifens, wenn der Reifenfülldruck anormal ist.

8. Verfahren zur Evaluierung des Verschleißes nach einem der vorhergehenden Ansprüche, bei dem die Messschritte mit einem inneren Wandler (11a), der in Bezug auf das Fahrzeug an einer Innenseite des Reifens (3) montiert ist, und mit einem äußeren Wandler (11b) durchgeführt werden, der an einer Außenseite des Reifens montiert ist.

9. Verfahren zur Evaluierung des Verschleißes nach Anspruch 8, umfassend die Schritte des Erzeugens mit Hilfe des inneren Wandlers (11a) einer ersten Evaluierung des Verschleißes an der Innenseite des Reifens und mit Hilfe des äußeren Wandlers (11b) einer zweiten Evaluierung des Verschleißes an der Außenseite des Reifens (3), und dann des Erfassens des Vorhandenseins oder des Nichtvorhandenseins eines Parallelitätsfehlers anhand der ersten Evaluierung des Verschleißes und der zweiten Evaluierung des Verschleißes.

10. Bordausrüstung, die ausgebildet ist, in ein Fahrzeug integriert zu werden und mit mindestens einem Wandler verbunden zu werden, und die eine Verarbeitungskomponente (10) umfasst, die ausgebildet ist, das Verfahren zur Evaluierung des Verschleißes nach einem der vorhergehenden Ansprüche durchzuführen.

11. Messsystem, umfassend einen Wandler (1; 11a, 11b) und eine Bordausrüstung nach Anspruch 10.

12. Messsystem nach Anspruch 11, umfassend einen inneren Wandler (11a), der ausgebildet ist, in Bezug auf das Fahrzeug an einer Innenseite eines Reifens montiert zu werden, und einen äußeren Wandler (11b), der ausgebildet ist, an einer Außenseite des Reifens montiert zu werden.

13. Computerprogramm, umfassend Anweisungen, die die Verarbeitungskomponente (10) der Bordausrüstung nach Anspruch 10 veranlassen, die Schritte des Verfahrens zur Evaluierung des Verschleißes nach einem der Ansprüche 1 bis 9 auszuführen.

14. Computerlesbarer Aufzeichnungsträger, auf dem das Computerprogramm nach Anspruch 13 gespeichert ist.

## Claims

1. A wear evaluation method for evaluating the wear of a vehicle wheel tire (3), the method comprising the following measurement steps:
· causing a transducer (1; 11a, 11b) positioned on the vehicle in the proximity of the tire (3) to emit a first ultrasonic signal (S1);
· acquiring an electrical measurement signal (Sm) produced by said transducer when it receives a second ultrasonic signal (S2) resulting from the first ultrasonic signal being reflected by a metal target (4) incorporated in a thickness of a crown area of the tire;
· measuring at least one parameter of the electrical measurement signal;
· evaluating the wear of the tire from said parameter.

2. A wear evaluation method according to claim 1, wherein the metal target (4) is incorporated in a thickness of a tread (2) of the tire (3).

3. A wear evaluation method according to claim 1, wherein the metal target forms part of tire reinforcement that is situated in the crown area under a tread of the tire.

4. A wear evaluation method according to any preceding claim, wherein the measurement steps are performed after the vehicle is started following a period during which the vehicle has been stopped for not less than a predetermined duration.

5. A wear evaluation method according to any preceding claim, wherein the measurement steps are performed when the wheel on which the tire (3) is fitted is straight.

6. A wear evaluation method according to claim 5, including acquiring information about the angular position of steering control means of the vehicle in order to determine whether the wheel is, or is not, straight.

7. A wear evaluation method according to any preceding claim, further comprising the steps of acquiring an estimate of tire inflation pressure, of verifying whether the inflation pressure is normal, and of invalidating the evaluation of tire wear if the inflation pressure is abnormal.

8. A wear evaluation method according to any preceding claim, wherein the measurement steps are performed with an inner transducer (11a) mounted at an inner side of the tire (3) relative to the vehicle, and with an outer transducer (11b) mounted at an outer side of the tire.

9. A wear evaluation method according to claim 8, comprising the steps of using the inner transducer (11a) to produce a first evaluation of the wear at the inner side of the tire and of using the outer transducer (11b) to produce a second evaluation of the wear at the outer side of the tire (3), and then of detecting the presence or the absence of proper alignment on the basis of the first and second evaluations of wear.

10. On-board equipment arranged to be incorporated in a vehicle and to be connected to at least one transducer, the equipment comprising a processor component (10) arranged to perform the wear evaluation method according to any preceding claim.

11. A measurement system comprising a transducer (1; 11a, 11b) and on-board equipment according to claim 10.

12. A measurement system according to claim 11, including an inner transducer (11a) arranged to be mounted at an inner side of a tire relative to the vehicle, and an outer transducer (11b) arranged to be mounted at an outer side of the tire.

13. A computer program including instructions that cause the processor component (10) of the on-board equipment according to claim 10 to execute the steps of the wear evaluation method according to any one of claims 1 to 9.

14. A computer readable storage medium storing the computer program according to claim 13.
